# EUROPEAN PATENT SPECIFICATION

(11) **EP 0 749 683 B1**
(45) Date of publication and mention of the grant of the patent: **10.11.1999**
(21) Application number: 96202480.8
(22) Date of filing: 17.09.1991
(51) Int. Cl.: A01J 7/00, A01J 5/017, A01J 7/04

(54) **A cleaning apparatus**
Reinigungsvorrichtung
Dispositif de nettoyage

(30) Priority: 18.09.1990 NL 9002047
(43) Date of publication of application: 27.12.1996
(62) Divisional of application: 94203054.5
(73) Proprietor: MAASLAND N.V., 3155 PD Maasland (NL)
(72) Inventor: van der Lely, Edwin, 3155 PD Maasland (NL); van den Berg, Karel, 2971 BR Bleskensgraaf (NL); Fransen, René, 3135 ZD Vlaardingen (NL)
(74) Representative: Corten, Maurice Jean F.M.

(56) References cited:
- EP-A- 0 309 036
- EP-A- 0 323 444
- WO-A-89/00378
- DD-A- 127 384
- DD-A- 220 212
- FR-A- 2 559 351
- GB-A- 976 025
- US-A- 2 952 860

## Description

The present invention relates to an apparatus for cleaning the teats of a dairy animal's udder, provided with a cleaning member capable of being driven and taken, at least partly, under the udder of the dairy animal, the cleaning member being provided with at least two cleaning tools which are mounted to rotate about a respective shaft.

Such an implement is known from FR-A-2 559 351.

The present invention aims at providing an implement such as described in the opening paragraph, with which it is possible to clean the teats of the udder intensively.

For this purpose the implement as meant in the opening paragraph, in accordance with the invention, is characterized in that the cleaning tools are provided with profiles, the profiles being ridged in shape and having such dimensions, that the two cleaning tools, disposed side by side, enclose a space into which a teat can be drawn.

According to a feature of the invention, the cleaning tools are of tubular shape.

According to a further feature of the invention, the axis of rotation of the cleaning tools are parallel to one another. According to another aspect of the invention, the cleaning tools are made from a flexible material.

According to an aspect of the invention, the cleaning tools are each others mirror image.

According to a feature of the invention, the surface layer of a cleaning tool is exchangeable, e.g. by means of a sleeve applied to the cleaning tool. When the sleeve is worn-out and/or not cleanable anymore, it can easily be renewed.

According to a further aspect of the invention, the profiles of the cleaning tools are of a circular shape. A circular shape is particularly advantageous as it corresponds with the shape of a teat.

According to a feature of the invention, the cleaning member is suitable for being placed on or near the end of the robot arm. In an advantageous embodiment of the invention, the cleaning member is capable of being motor-driven and is provided on or near the extremity of a support to be placed under the dairy animal.

According to another aspect of the invention the support is provided with a connecting and disconnecting member, by means of which it can be coupled to, or uncoupled from the robot arm.

According to a further feature of the invention, the support can be placed on or near the teat cups, while it is preferably secured to the teat cups by suction. According to a feature of the invention, hereto the support can be provided with projections, preferably teat-shaped projections, which by applying a vacuum to the teat cups are drawn into the teat cups, so enabling the support to be secured by suction in a fixed position in relation to the teat cup cluster.

According to another aspect of the invention, the cleaning member is provided with cleaning tools and there are provided cleaning means for decontaminating the cleaning tools. Before the teats of another animal are cleaned with the cleaning tools, it is thus possible to decontaminate the cleaning tools, so minimizing the risk of cross infections.

According to an aspect of the invention, the cleaning tool/tools and/or cleaning member are able to be taken to a cleaning plant by the robot arm which is used for attaching the teat cups or by a separate robot arm.

According to a feature of the invention, the cleaning plant comprises a container in which a cleaning or rinsing liquid can be provided. A second container is arranged in the first container and, according to a further feature of the invention, is provided with perforations. According to a further feature, the second container is rotatable with respect to the outer container. In the container there is/are provided one or a plurality of brushes, by means of which, according to a further aspect of the invention, the cleaning tools are brushed down. In an advantageous embodiment of the invention, in the container there is a sensor for monitoring the quality of the cleaning or rinsing liquid. According to a further feature of the invention, the sensor performs luminous intensity measurements.

According to a further aspect of the invention, the cleaning tools are fully or partly constituted by or have a surface constituted by a moisture-absorbing material having a texture or being made from a woven product or from a sponge-like material or constituted by a fully or partly closed cell structure, such as rubber or plastic-like material, said cleaning tools operating with a rubbing motion.

The cleaning tools, according to another feature of the invention, have a portion with an empty space. According to the invention, the apparatus can be provided with the feature that a liquid, such as a cleaning or disinfecting liquid, can be fed into the empty space, thereby enabling the surface of the cleaning tools to be moistened with it.

According to a feature of the invention, the cleaning tools may be of an elastic material, such as rubber or plastic, assuming its operative shape at a certain pneumatic or hydraulic pressure.

According to the invention, the apparatus can have the feature that the cleaning tools or the cleaning member is/are capable of being coupled or uncoupled by means of a quick-action attachment, such as a bayonet joint.

In a particular embodiment according to the invention, the cleaning member is provided with protective means. According to a further feature of the invention, these protective means comprise a contact strip which extends fully or partly along the cleaning tools. According to another aspect of the invention, the contact strip enables a signal to pass when it is in contact with the dairy animal, causing the robot arm to move in a direction away from the point of contact. According to another feature of the invention, the protective means comprise a sensor or contact member provided on the top side of the shaft directed upward. The contact member is a switch or distance sensor which causes, according to a further aspect of the invention, the rotary motion of the cleaning tool to stop and/or brings about a movement of the robot arm in a direction away from the point of contact.

In explanation of the invention, a few embodiments of the apparatus for cleaning the teats will now be described with reference to the accompanying drawings, in which:
Figure 1 shows a top view of the apparatus for cleaning the teats of a dairy animal's udder;
Figure 2 shows a side view of the apparatus depicted in Figure 1;
Figure 3 is a top view of a first embodiment of the cleaning member as used in the apparatus depicted in Figure 1;
Figure 4 shows a partial cut-away side view according to line IV-IV in Figure 3;
Figure 5 shows a side view along the arrow V in Figure 3;
Figure 6 shows a side view of a second embodiment of a cleaning member;
Figure 7 is a top view of the paths described by the cleaning tools of the cleaning member accoding to Figure 6;
Figure 8 is a side view of a third embodiment of a cleaning member.

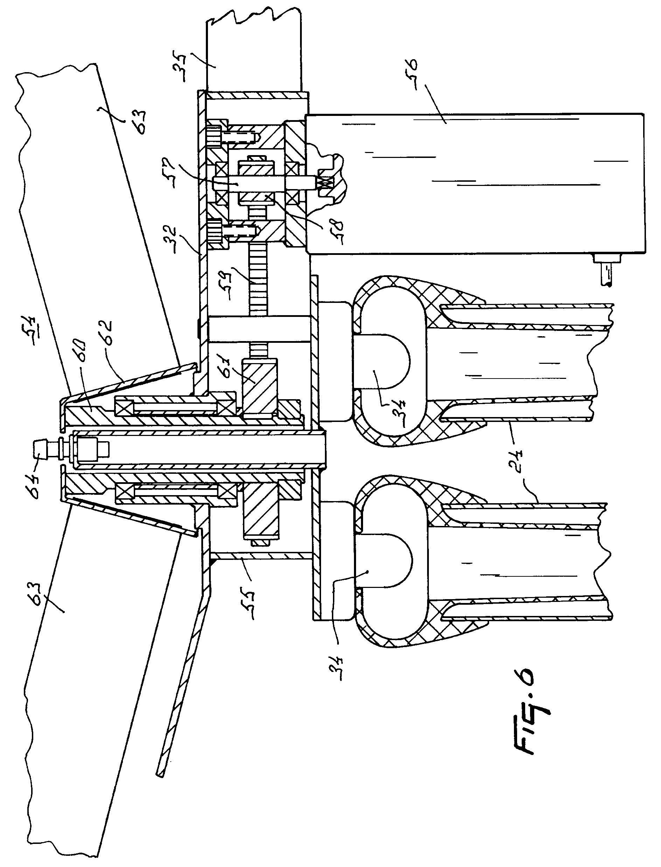

Figures 6 to 8 do not show embodiments of the invention.

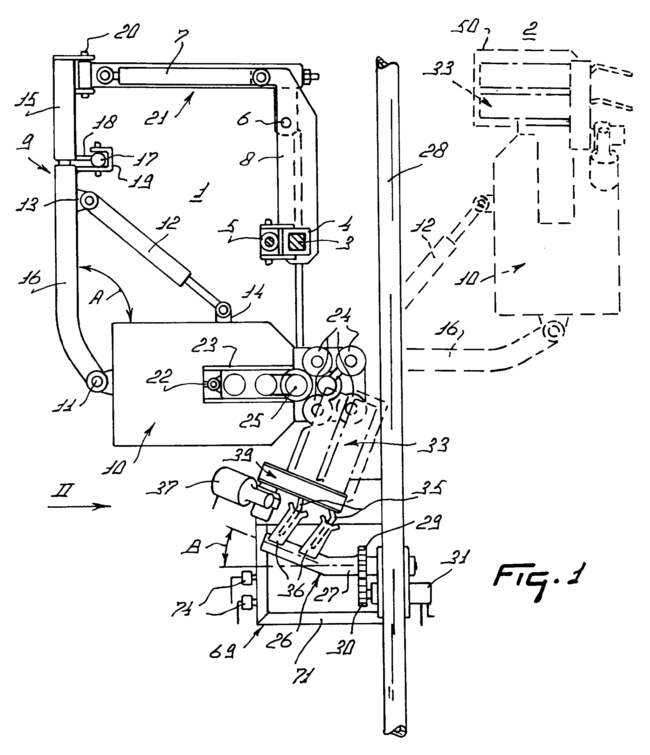

The apparatus depicted in Figure 1 has a robot arm 1 which, in the position marked by continuous lines, is in a condition of rest, and, in the position marked by dashed lines, is in operating condition. Figure 1 shows only the side portion of a cleaning/milking parlour. To the right and to the left, this cleaning/milking parlour is extended with common frame parts, gates for opening and closing to enable an animal, such as a cow, to enter and to leave the parlour, a feeder etc., the said parts having no direct connection with the invention.

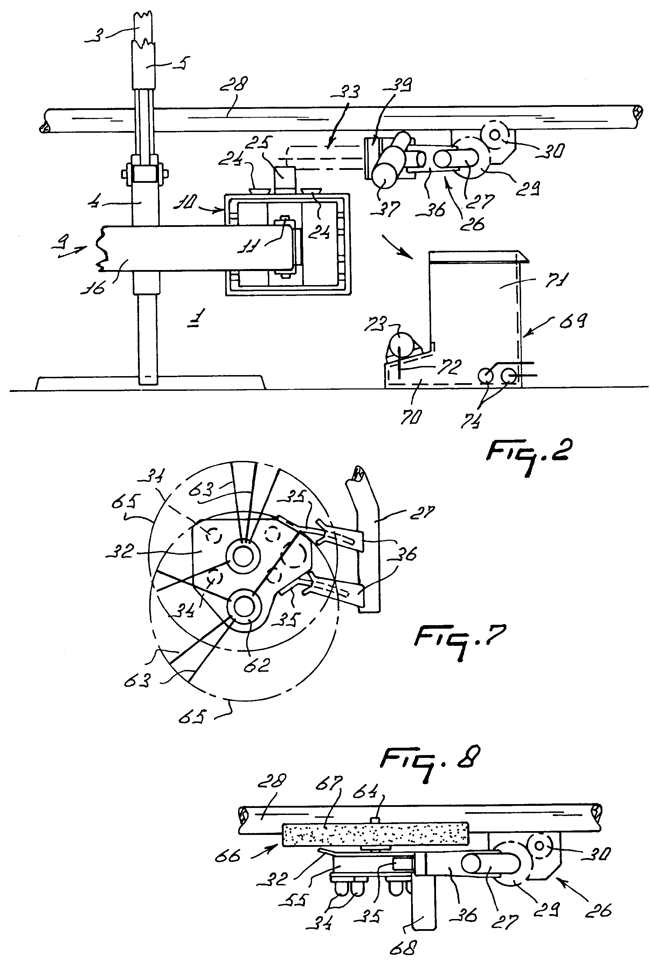

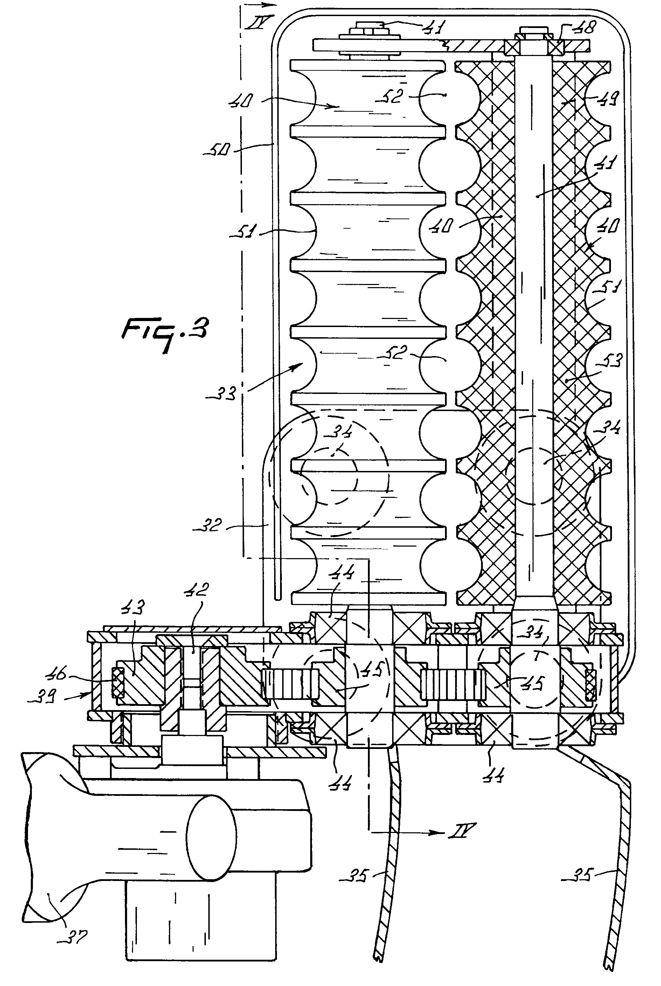

When an animal has taken its place on the milking/cleaning parlour 2, a milking/cleaning apparatus can be applied to the teats of the dairy animal's udder by swivelling robot arm 1. As will appear from the following, the robot arm 1 depicted in Figures 1 and 2 is suitable for taking both the cleaning apparatus and the teat cups under the animal to be milked. It stands to reason that separate robot arms can also be used for cleaning the teats and for attaching the teat cups.

A robot arm 1 for attaching the teat cups has been described extensively in European Patent Application 0300582. The robot arm 1 is connected slidably in height with a frame beam 3 by means of a sliding sleeve 4 which is mounted slidably on the frame beam 3. Sliding the slidable sleeve 4 in upward direction is effected by means of a cylinder 5, one end of which is connected with the frame beam 3 and the other end with the sliding sleeve 4. Furthermore, the robot arm 1 can be swivelled about a substantially vertical hinge pin 6. The robot arm is swivelled about the vertical hinge pin 6 by means of a cylinder 7, one end of which is (rotatably) attached to a support 8 welded onto the frame beam 3 and the other end (rotatably) attached to a first portion 9 of the robot arm 1. It will be obvious that the robot arm 1 can be swivelled from the position of rest to the operating position, and vice versa, by operating the cylinder 7.

A second portion 10 is pivotably mounted on a hinge pin 11 on the first portion 9 of the robot arm 1. The second portion 10 of the robot arm 1 can be swivelled about the hinge pin 11 by means of a cylinder 12 whose one end is secured to a support 13 of the first portion 9 of the robot arm 1 and whose other end is secured to a support 14 of the second portion 10 of the robot arm 1. The second portion 10 of the robot arm 1 can be swivelled about the hinge pin 11 into a desired angle A by means of the cylinder 12.

The first portion 9 of the robot arm 1 comprises a portion 15 and a portion 16 which can turn in relation to one another as is indicated by the arrows in Figure 1. The two portions 15, 16 can be turned in relation to one another by means of a cylinder 17. One end of the cylinder 17 is connected with a support 18 mounted to the portion 15 and the other end is connected with a support 19 mounted on the portion 16. The second portion 10 of the robot arm 1 can be put at an angle to a horizontal plane by means of the cylinder 17.

The first portion 9 of the robot arm 1 is also provided with a hinge 20 connecting a portion 21 with the portion 15. The hinge 20 is meant for protection of the robot arm 1. In the unlikely event of the animal treading on the second portion of the robot arm 1, the two portions 15 and 21 will pin-pivot in relation to one another against the action of springs, thus limiting the risk of the robot arm 1 being damaged to a considerable extent.

Mounted on the second portion 10 of the robot arm 1 (see Figure 1) is a slide 22 which can be moved along a rail 23 through the activation of a (non-shown) control cylinder. On the slide 22 there are provided teat cups 24 as well as (non-shown) attachment means suitable for attaching the teat cups 24 to the teats.

Furthermore, a sensor 25 capable of detecting the animal's teats is provided on the slide 22. The signal produced by the sensor 25 is processed by a computer to generate a signal serving the operation of the control cylinders of the robot arm 1. This enables the end of the robot arm to follow continuously the relevant teats when the animal changes (to some extent) its position.

Besides a first robot arm 1, a second robot arm 26 is provided. The second robot arm 26 comprises a shaft 27, of which one end is suspended in a bearing on the frame 28 and which shaft is provided with a gear wheel 29 meshing with a second gear wheel 30 fitted on the shaft of an electric motor 31 attached next to the bearing of the second robot arm 26 to the frame 28. A removable support 32 is attached to the free end of the second robot arm 26 which cranked through angle B and has a cleaning member 33 disposed on it.

The bottom side of the support 32 is provided with a teat-shaped projection 34, by means of which it is possible to place the support 32 on the first robot arm 1. To this end, the first robot arm 1 with the teat cups 24 have to be taken to a position under the teat-shaped projections 34 of the support 32. By applying a vacuum to the teat cups 24, the teat-shaped projections 34 are drawn into, and secured to, the teat cups 24 by suction, enabling the support 32, one end of which is provided with spring-steel strips 35 in holders 36, to be detached from the second robot arm 26. An electric motor 37 attached to the support 32 is for driving the cleaning member 33. The control of the electric motor 37 proceeds through a flexible electrical cable 38.

An alternative is to realise the control of the electric motor 37 through contact strips which are located on the bottom side of the support 32, which contact strips make contact with contact strips located on the first robot arm 1 or the second robot arm 26, as the case may be, after the support 32 has been secured by suction.

Before the teat cups 24 are connected to the animal to be milked, the animal's teats should be cleaned. By means of an identification system to identify a given animal and the sensor 25 which is located on the first robot arm 1 and which is capable of detecting the positions of the teats, the first robot arm is put into an appropriate position under computer control. All this being known to the art and being no part of the present invention, further details will not be described hereinafter.

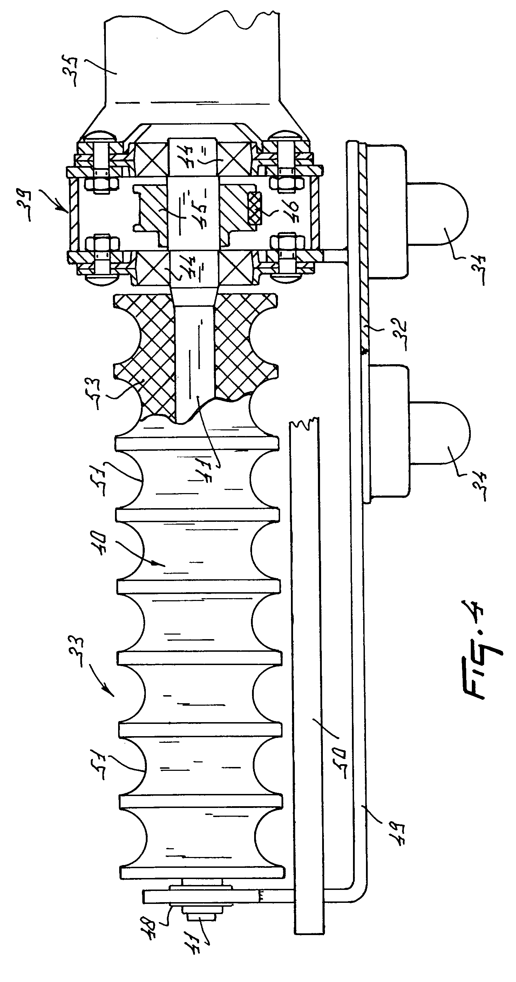

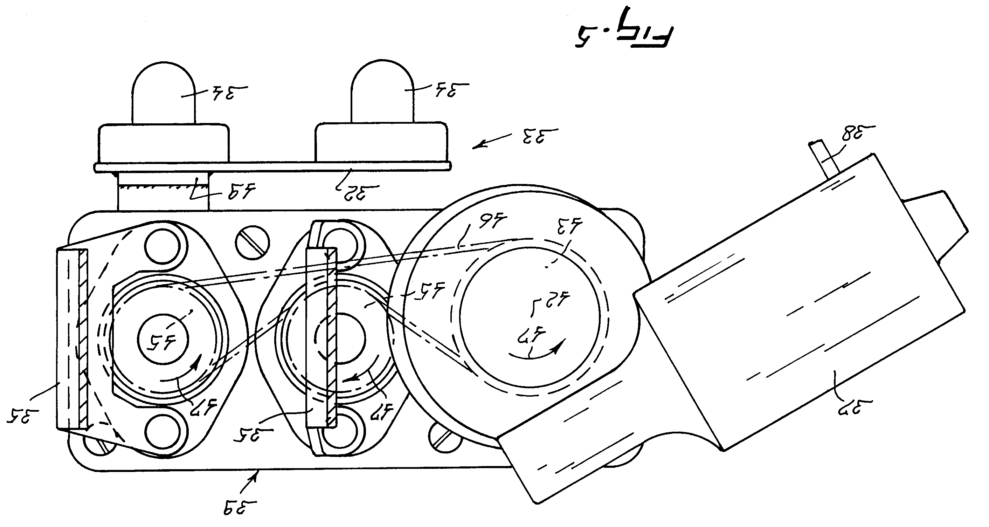

Figure 3 shows a top view of the cleaning member 33. The cleaning member 33 comprises a housing 39 accommodating cleaning tools 40 with shafts 41 and having the electric motor 37 attached. The electric motor 37 is to drive a shaft 42 on which a gear wheel 43 is mounted, with the gear wheel 43 being located within the housing 39. The shafts 41 are supported in bearings 44 fitted on the housing. Situated within the housing 39, gear wheels 45 are mounted at the end of the cleaning tools 40. A timing belt 46 connects the gear wheels 45 of the cleaning tools 40 to the gear wheel 43 of the electric motor 37. From Figure 5 it can be seen that the timing belt 46 is routed round the outer two gear wheels 43, 45 and is underneath the middle gear wheel 45. The situation of the timing belt 44 on the gear wheels 43, 45 results in a direction of rotation of the cleaning tools 40 as is indicated by the arrows 47 in Figure 5. A teat coming from above into the space between the cleaning tools 40 is drawn downward in between the cleaning tools owing to this direction of rotation. Thus a "locating" action of the cleaning tools 40 is obtained. The rotational speed of the cleaning tools 40 is adjustable, with its value being roughly between 70 and 120 RPM.

Figure 4 shows that the shafts 41 of the cleaning tools 40 have the other ends supported in bearings 48 fitted in brackets 49 extending underneath the cleaning tools 40. The brackets 49 prevent the shafts 41 of the cleaning tools 40 from flexing too far.

A contact strip 50 encircling the cleaning member 33 and, like all other controllable elements of the apparatus, being connected to the computer ensures that the cleaning member 33 will not be damaged when it comes into contact with the animal. To achieve this, the computer sends the robot arm 1 in a direction away from the point of contact.

Mounted on each of the shafts 41 is a flexible cleaning tool 49 having a closed cell structure and having a profile 51 on the outer side. The profile 51 is ridged in shape and it has such dimensions that the two cleaning tools 40 disposed parallel and side by side enclose a space 52 formed by their profiles 51, into which a teat can be drawn. The surface of the cleaning tools 40 is that of a textured, moisture absorbing layer 53. The layer 53 is constituted by a replaceable sleeve pushed onto cleaning tool 40, as is indicated by the hatching in Figure 3. When the sleeve is worn and/or not cleanable any more, it should be renewed.

A further alternative is to replace the whole cleaning tools 40 when they are soiled or worn. This is achieved e.g. by securing the shaft 41 in the housing 39 by means of a quick-action attachment, such as a bayonet joint.

Figure 6 shows a different embodiment of the cleaning member; this cleaning member 54 is mounted on the support 32 in a similar way as is the cleaning member 33 mentioned before. The cleaning member 54 is atached by suction to the teat cups 24 by means of the teat-shaped projections 34 of the support 32. On the support 32 there is provided a housing 55, to whose bottom side an electric motor 56 is attached. The electric motor 56 is to drive a shaft 57 located in the housing 55 where it is supported in bearings. The shaft 57 is provided with a gear wheel 58, by means of which a timing belt 59 is driven. The cleaning member 54 has a shaft 60 supported in bearings in the housing 55 and its lower end is provided with a gear 61 carrying the timing belt 59 driven by the gear wheel 58 of the electric motor 56. At the other end of the shaft 60 there is provided a conical cap 62, to which strip-shaped pieces of cloth (cleaning tools) 63 are attached. The length of the pieces of cloth 63 measured with respect to the centre of the shaft 60 is about 240 mms. The rotary speed of the shaft 60 is about 450 RPM. At said rotary speed, the cleaning tools 63 assume an attitude which is upwardly sloping in radial direction under the influence of the centrifugal force exerted. In the vicinity of the top of the conical cap 62 there is provided a switch 62 which causes the rotation of the shaft 60 to stop when the switch 64 is operated by touching the animal. Thus, it is obviated that injuries are inflicted on the animal when the rotating cone 62 is pressed against her.

The robot arm 1 puts the rotating pieces of cloth 63, which have been moistened to a certain extent, into such a position that they strike the teats and, owing to their flexibility, surround same. Alternatively, it is also possible to dispose two such cleaning members 54 side by side. In Figure 7 the two rotary paths 65 of the cleaning tools 63 are indicated by dashed lines. The cleaning members 54 are disposed such that the axes of rotation of the shafts 60 are inclined with respect to the support 32. Consequently, the two rotary paths 65 of the rotary cleaning tools 63 are parallel to each other. This makes it feasible to clean fore and hind teats at the same time.

Figure 8 shows an other cleaning member 66. It is a sponge 67 which is provided on the support 32 and is capable of being set in motion by an electric motor 68. By pressing the sponge against the teats, the teats are rubbed clean. When rubbing, the sponge 67 moves in a plane parallel to the support 32. The path followed by the sponge 67 doing so can be in the shape of a circle or ellipse or any other pattern.

After the cleaning of the teats, the cleaning member 33, 54, 66 can be removed from the space under the animal by means of the robot arm 1. Then, the support 32 with the spring steel strips 35 is re-inserted into the holders 36. Subsequently, the vacuum of the teat cups 24 is released and the first robot arm 1 is disconnected from the support 32. Before cleaning another animal, it is possible to wash the cleaning member 33, 54, 66. Hereto, the electric motor 37, 56, 68 of the second robot arm 26 is energized, so that shaft 27 rotates through a certain angle. The cleaning member 33, 54, 66 is thus taken to a washing machine 69. In Figure 2, the washing machine 69 comprises a first container 70 and, disposed herein, a rotatable second container 71 provided with perforations. The first container 76 is capable of being filled with a cleaning or rinsing liquid by means of a pump 73 using a line 72 connected to the first container 76. The perforated container 72 ensures that the cleaning or rinsing liquid is agitated appropriately. To prevent liquid from dripping from the cleaning tools 40, 63, 67 during the cleaning of the teats, the cleaning tools 40, 63, 67 are removed from the liquid and rotated at a high speed for some time. This causes the excess liquid to drop back into the first container 70.

After a given time, the electronic motor 31 can be energized again, causing the second robot arm 26 to return to its original position.

In the washing machine 69 there is provided a liquid-quality monitoring sensor 74 which tests the quality of the remaining cleaning or rinsing liquid. For instance, this is a luminous-intensity sensor. When it is detected that the liquid quality is insufficient, the dirtied liquid can be drained off by activation of the pump 73 and fresh cleaning or rinsing liquid be pumped into the container 70. To achieve better cleaning results, the cleaning or rinsing liquid can be preheated. This can be realised by means of a heater coil or a (small-size) domestic heater.

## Claims

1. An apparatus for cleaning the teats of a dairy animal's udder, provided with a cleaning member (33) capable of being driven and taken, at least partly, under the udder of the dairy animal, the cleaning member being provided with at least two cleaning tools (40) which are mounted to rotate about a respective shaft (41), characterized in that the cleaning tools (40) are provided with profiles (51), the profiles being ridged in shape and having such dimensions, that the two cleaning tools (40), disposed side by side, enclose a space (52), into which a teat can be drawn.

2. An apparatus as claimed in claim 1, characterized in that the cleaning tools (40) are of a tubular shape.

3. An apparatus as claimed in claim 1 or 2, characterized in that the axis of rotation of the cleaning tools (40) are parallel to one another.

4. An apparatus as claimed in claim 1, 2 or 3, characterized in that the cleaning tools (40) are made from a flexible material.

5. An apparatus as claimed in anyone of claims 1 - 4, characterized in that the cleaning tools (40) are each other's mirror image.

6. An apparatus as claimed in anyone of the preceding claims, characterized in that the cleaning tools (40) have a portion with an empty space, to which e.g. a cleaning or desinfecting liquid can be fed, enabling the surface of the cleaning tools (40) to be moistened with it.

7. An apparatus as claimed in anyone of the preceding claims, characterized in that the cleaning tools (40) are of an elastic material, such as rubber or plastic, assuming its operative shape at a certain pneumatic or hydraulic pressure.

8. An apparatus as claimed in anyone of the preceding claims, characterized in that the surface layer of a cleaning tool (40) is exchangeable e.g. through a sleeve applied to the cleaning tool (40).

9. An apparatus as claimed in anyone of the preceding claims, characterized in that the cleaning tools (40) or the cleaning member (33) is/are capable of being coupled or uncoupled by means of a quick-action attachment, such as a bayonet joint.

10. An apparatus as claimed in anyone of the preceding claims, characterized in that the cleaning member (33) is provided on or near the extremity of a support (32) to be placed under the dairy animal, by means of a robot arm (1).

11. An apparatus as claimed in claim 10, characterized in that the support (32) is provided with a connecting and disconnecting member (35), by means of which it can be coupled to, or uncoupled from the robot arm (1).

12. An apparatus as claimed in anyone of the preceding claims, characterized in that the profiles (51) of the cleaning tools (40) are of a circular shape.

## Patentansprüche

1. Vorrichtung zum Reinigen der Zitzen des Euters eines milchgebenden Tieres, mit einer Reinigungsvorrichtung (33), die antreibbar und zumindest teilweise unter das Euter des milchgebenden Tieres zu bewegen ist, wobei die Reinigungsvorrichtung mindestens zwei Reinigungswerkzeuge (40) aufweist, die jeweils um eine Achse (41) drehbar sind,
dadurch gekennzeichnet, daß die Reinigungswerkzeuge (40) Profile (51) aufweisen, wobei die Profile rippenförmig ausgebildet und so bemessen sind, daß die beiden nebeneinander angeordneten Reinigungswerkzeuge (40) einen Spalt (52) bilden, in den eine Zitze hineinzuziehen ist.

2. Vorrichtung nach Anspruch 1,
dadurch gekennzeichnet, daß die Reinigungswerkzeuge (40) rohrförmig ausgebildet sind.

3. Vorrichtung nach Anspruch 1 oder 2,
dadurch gekennzeichnet, daß die Drehachsen der Reinigungswerkzeuge (40) parallel zueinander angeordnet sind.

4. Vorrichtung nach Anspruch 1, 2 oder 3,
dadurch gekennzeichnet, daß die Reinigungswerkzeuge (40) aus einem flexiblen Material hergestellt sind.

5. Vorrichtung nach einem der Ansprüche 1 bis 4,
dadurch gekennzeichnet, daß die Reinigungswerkzeuge (40) spiegelbildlich zueinander ausgebildet sind.

6. Vorrichtung nach einem der vorhergehenden Ansprüche,
dadurch gekennzeichnet, daß die Reinigungswerkzeuge (40) einen Abschnitt mit einem Hohlraum aufweisen, in den beispielsweise eine Reinigungs- oder Desinfektionsflüssigkeit einzuleiten ist, mittels der die Oberfläche der Reinigungswerkzeuge (40) anzufeuchten ist.

7. Vorrichtung nach einem der vorhergehenden Ansprüche,
dadurch gekennzeichnet, daß die Reinigungswerkzeuge (40) aus einem elastischen Material wie z. B. Gummi oder Kunststoff hergestellt sind und ihre für den Betrieb erforderliche Gestalt bei einem bestimmten pneumatischen oder hydraulischen Druck annehmen.

8. Vorrichtung nach einem der vorhergehenden Ansprüche,
dadurch gekennzeichnet, daß die die Oberfläche bildenden Teile eines Reinigungswerkzeuges (40) auswechselbar sind, beispielsweise mittels einer an dem Reinigungswerkzeug (40) angebrachten Hülse.

9. Vorrichtung nach einem der vorhergehenden Ansprüche,
dadurch gekennzeichnet, daß die Reinigungswerkzeuge (40) oder die Reinigungsvorrichtung (33) mittels eines Schnellverschlusses, beispielsweise eines Bajonettverschlusses, anzuschließen oder zu lösen sind.

10. Vorrichtung nach einem der vorhergehenden Ansprüche,
dadurch gekennzeichnet, daß die Reinigungsvorrichtung (33) an oder nahe dem Ende eines Trägers (32) angeordnet ist, der mittels eines Roboterarmes (1) unter das milchgebende Tier zu bewegen ist.

11. Vorrichtung nach Anspruch 10,
dadurch gekennzeichnet, daß der Träger (32) ein Verbindungs- und Trennglied (35) aufweist, mittels dessen der Träger mit dem Roboterarm (1) zu verbinden oder von ihm zu trennen ist.

12. Vorrichtung nach einem der vorhergehenden Ansprüche,
dadurch gekennzeichnet, daß die Profile (51) der Reinigungswerkzeuge (40) kreisförmig ausgebildet sind.

## Revendications

1. Dispositif pour nettoyer les trayons d'une mamelle d'animal laitier, muni d'un élément de nettoyage (33) capable d'être entraîné et amené, au moins partiellement, sous la mamelle de l'animal laitier, l'élément de nettoyage étant muni d'au moins deux outils de nettoyage (40) qui sont montés pour tourner autour d'un arbre respectif (41), caractérisé en ce que les outils de nettoyage (40) sont munis de parties profilées (51), les parties profilées ayant une forme nervurée et ayant des dimensions telles que les deux outils de nettoyage (40), disposés côte à côte, définissent un espace (52), dans lequel un trayon peut être tiré.

2. Dispositif selon la revendication 1, caractérisé en ce que les outils de nettoyage (40) ont une forme tubulaire.

3. Dispositif selon la revendication 1 ou 2, caractérisé en ce que les axes de rotation des outils de nettoyage (40) sont parallèles l'un à l'autre.

4. Dispositif selon la revendication 1, 2 ou 3, caractérisé en ce que les outils de nettoyage (40) sont constitués d'un matériau souple.

5. Dispositif selon l'une quelconque des revendications 1 à 4, caractérisé en ce que les outils de nettoyage (40) sont chacun une image miroir de l'autre.

6. Dispositif selon l'une quelconque des revendications précédentes, caractérisé en ce que les outils de nettoyage (40) ont une partie ayant un espace vide, vers lequel un liquide par exemple de nettoyage ou de désinfection peut être acheminé, permettant à la surface des outils de nettoyage (40) d'être humecté par celui-ci.

7. Dispositif selon l'une quelconque des revendications précédentes, caractérisé en ce que les outils de nettoyage (40) sont constitués d'un matériau élastique, tel que du caoutchouc ou une matière plastique, prenant sa forme active à une certaine pression pneumatique ou hydraulique.

8. Dispositif selon l'une quelconque des revendications précédentes, caractérisé en ce que la couche de surface d'un outil de nettoyage (40) est échangeable par exemple par l'intermédiaire d'un manchon appliqué sur l'outil de nettoyage (40).

9. Dispositif selon l'une quelconque des revendications précédentes, caractérisé en ce que les outils de nettoyage (40) ou l'élément de nettoyage (33) sont/est capables d'être accouplés ou désaccouplés par l'intermédiaire d'une fixation rapide, telle qu'une liaison à baïonnette.

10. Dispositif selon l'une quelconque des revendications précédentes, caractérisé en ce que l'élément de nettoyage (33) est muni sur l'extrémité, ou à proximité de celle-ci, d'un support (32) à placer sous l'animal laitier, par l'intermédiaire d'un bras de robot (1).

11. Dispositif selon la revendication 10, caractérisé en ce que le support (32) est muni d'un élément de connexion et de déconnexion (35) par l'intermédiaire duquel il peut être couplé au bras de robot (1) ou désaccouplé de celui-ci.

12. Dispositif selon l'une quelconque des revendications précédentes, caractérisé en ce que les parties profilées (51) des outils de nettoyage (40) ont une forme circulaire.
